(19) Europäisches Patentamt
European Patent Office
Office européen des brevets

(11) **EP 3 460 555 B1**

(12) **EUROPEAN PATENT SPECIFICATION**

(45) Date of publication and mention
of the grant of the patent:
**13.05.2020  Bulletin 2020/20**

(51) Int Cl.:
*G02B 7/02* *(2006.01)*          *B29D 11/00* *(2006.01)*

(21) Application number: **18195769.7**

(22) Date of filing: **20.09.2018**

(54) **LENS UNIT**

LINSENEINHEIT

UNITÉ DE LENTILLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.09.2017  JP 2017180936**

(43) Date of publication of application:
**27.03.2019  Bulletin 2019/13**

(73) Proprietor: **Nidec Sankyo Corporation
Nagano 393-8511 (JP)**

(72) Inventor: **KASAHARA, Takuya
Suwa-gun, Nagano 393-8511 (JP)**

(74) Representative: **2K Patentanwälte Blasberg
Kewitz & Reichel
Partnerschaft mbB
Schumannstrasse 27
60325 Frankfurt am Main (DE)**

(56) References cited:
**EP-A1- 3 301 492          JP-A- S59 202 415
JP-A- S60 191 201          JP-A- 2010 164 718
US-A1- 2013 176 633       US-A1- 2014 293 217
US-A1- 2014 347 494       US-A1- 2015 323 708
US-A1- 2016 349 475**

## Description

### TECHNICAL FIELD

The present invention relates to a lens unit in which a plurality of lenses are held in a cylindrical holder.

### BACKGROUND ART

In a lens unit in which a plurality of lenses configuring a wide-angle lens are held in a cylindrical holder, a cemented lens is often used to reduce an aberration. In the cemented lens, one lens (first lens) and the other lens (second lens) are bonded by an adhesive layer. In a lens unit described in Patent Documents 1, 2, a first lens and a second lens are both made of plastic. Accordingly, the first lens includes a flange part (first flange part) at an outer peripheral side of a concave lens surface facing a side of the second lens, and the second lens includes a flange part (second flange part) at an outer peripheral side of a convex lens surface bonded by an adhesive layer on the concave lens surface of the first lens.

### PRIOR ART DOCUMENT

### PATENT DOCUMENT

Patent Document 1: Japanese Unexamined Patent Application Publication No. 2015-034922
Patent Document 2: Japanese Unexamined Patent Application Publication No. 2016-057562
Patent Document 3: EP 3 301 492 A1

### SUMMARY OF THE INVENTION

### PROBLEMS TO BE SOLVED BY THE INVENTION

In the cemented lens described in Patent Documents 1, 2 and the like, the greater a curvature of the lens surface (1/radius of curvature) is, the more efficiently the lens can reduce the aberration, and thus, in the second lens, the convex lens surface greatly protrudes from the second flange part. Accordingly, when the second lens is molded in a mold, a distance in an optical axis direction from a gate set on a side of the second flange part to an apex of the convex lens surface is increased. Therefore, it is likely that a recess generated due to a resin shrinkage occurs at the apex of the convex lens surface. Such a recess deteriorates an optical property of the lens unit, including lowering a resolution and the like of the lens unit, and thus, not preferable. Patent Document 3, which is later published and falls within the terms of Article 54 (3) EPC, shows a similar device. Conventional lens units are also disclosed in US 2015/323708, US 2016/349475, JP 2010 164718, JP S59 202415, US 2014/347494, US 2014/293217, US 2013/176633, and JP S60 191201. However these conventional lens units do not show or teach to provide any particular size ratio between the thickness of a flange part of one of the lenses, and the central thickness of the lens or the thickness of the lens from the apex to the flange.

In view of the above problems, an object of the present invention provides a lens unit in which it is less likely that a deterioration of an optical property generated due to a resin shrinkage during molding occurs even if a convex lens surface of a plastic lens used for a cemented lens is greatly protruded.

### SOLUTION TO PROBLEM

To resolve the above problems, the present invention is a lens unit as defined in claim 1.

In the present invention, as a value (TO/C) obtained by dividing the center thickness T0 of the second lens by the thickness C of the second flange part is equal to or more than a lower limit (2.0), the convex lens surface of the second lens can be greatly protruded. Therefore, it is possible to effectively reduce an aberration such as a chromatic aberration. In this case, the value (TO/C) is equal to or less than an upper limit (3.2), and when the second lens is molded in a mold, a distance in an optical axis direction from a gate set on a side of the second flange part to an apex of the convex lens surface is regulated. Accordingly, an injection pressure during resin molding can be properly transmitted to the apex of the convex lens surface, and thus, a recess generated due to a resin shrinkage or the like is less likely to occur at the apex of the convex lens surface. Further, even if a recess generated due to a resin shrinkage or the like occurs at the apex of the convex lens surface, the recess is filled with an adhesive layer during formation of a cemented lens. Moreover, the refractive index n0 of the adhesive layer is closer in value to the refractive index n2 of the second lens than the refractive index n1 of the first lens. Therefore, the adhesive layer filled in the recess acts as a part of the convex lens surface of the second lens, and thus, the optical property of the lens unit is less likely to deteriorate.

In the present invention, the second lens adopts a mode in which when T1 denotes a dimension in an optical axis direction from the apex of the convex lens surface to a surface at the side of the first lens of the second flange part, the dimension T1 and the thickness C satisfy the following relationship of:

$$T1/C \leq 1.5.$$

According to such a mode, even if the convex lens surface is protruded greatly from the second flange part, the upper limit (1.5) is set, and thus, a recess generated due to the resin shrinkage or the like is less likely to occur at the apex of the convex lens surface.

In the present invention, it is possible to adopt a mode in which when D denotes a lens diameter of the convex lens surface, the lens diameter D and the thickness T0 satisfy the following relationship of:

$$T0 \leq D.$$

According to such a mode, even if the thickness of the second lens is increased, a condition (D) is set, and thus, a recess generated due to a resin shrinkage or the like is less likely to occur at the apex of the convex lens surface.

In the present invention, the refractive indexes n0, n1, and n2 may adopt a mode in which the following relationship is satisfied:

$$n0 \leq n2 < n1.$$

According to such a mode, it is possible to properly reduce an aberration such as a chromatic aberration.

In the present invention, the refractive indexes n0 and n2 may adopt a mode in which the following relationship is satisfied:

$$n0 \geq (n2 - 0.06).$$

According to such a mode, the adhesive layer filled in the recess more properly acts as a part of the convex lens surface of the second lens, and thus, the optical property of the lens unit is less likely to deteriorate.

In the present invention, it is possible to adopt a mode in which the first lens is arranged at an object side of the second lens. According to such a mode, it is possible to properly reduce an aberration such as a chromatic aberration.

In the present invention, it is possible to adopt a mode in which when v1 denotes the Abbe number of the first lens and v2 denotes the Abbe number of the second lens, the Abbe numbers v1 and v2 satisfy both of the following relationships of:

$$v1 \leq 30,$$

and

$$v2 \geq 50.$$

According to such a mode, in particular, the present invention is suitable for reducing a chromatic aberration.

**ADVANTAGEOUS EFFECTS OF INVENTION**

In the present invention, as a value (TO/C) obtained by dividing the center thickness T0 of the second lens by the thickness C of the second flange part is equal to or more than a lower limit (2.0), the convex lens surface of the second lens can be greatly protruded. Therefore, it is possible to effectively reduce an aberration such as a chromatic aberration. In this case, the value (TO/C) is equal to or less than an upper limit (3.2), and when the second lens is molded in a mold, a distance in an optical axis direction from a gate set on a side of the second flange part to an apex of the convex lens surface is regulated. Accordingly, an injection pressure during resin molding can be properly transmitted to the apex of the convex lens surface, and thus, a recess generated due to a resin shrinkage or the like is less likely to occur at the apex of the convex lens surface. Further, even if a recess generated due to a resin shrinkage or the like occurs at the apex of the convex lens surface, the recess is filled with an adhesive layer during formation of a cemented lens. Moreover, the refractive index n0 of the adhesive layer is closer in value to the refractive index n2 of the second lens than the refractive index n1 of the first lens. Therefore, the adhesive layer filled in the recess acts as a part of the convex lens surface of the second lens, and thus, the optical property of the lens unit is less likely to deteriorate.

## BRIEF DESCRIPTION OF THE DRAWINGS

Fig. 1 is an explanatory diagram illustrating a cross-sectional configuration of a lens unit to which the present invention applies.
Fig. 2 is an explanatory diagram illustrating a cross-sectional configuration of a cemented lens illustrated in Fig. 1.
Fig. 3 is an explanatory diagram illustrating a cross-sectional configuration of a first lens and a second lens used for the cemented lens illustrated in Fig. 2.
Fig. 4 is an explanatory diagram illustrating a gap between the first lens and the second lens illustrated in Fig. 2 in an enlarged manner.

## DESCRIPTION OF THE EMBODIMENT

Hereinafter, an embodiment of the present invention will be described. In the following description, a lens unit with a lens configuration of five lenses in four groups will be mainly described, and a lens unit with another lens configuration will be described in other embodiments.

(Configuration of lens unit)

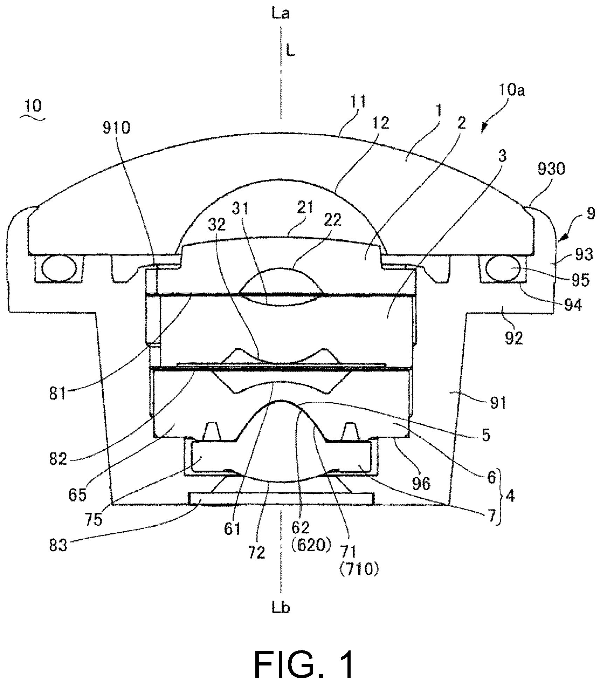

Fig. 1 is an explanatory diagram illustrating a cross-sectional configuration of a lens unit 10 to which the present invention applies. As illustrated in Fig. 1, the lens unit 10 of the present embodiment includes a wide-angle lens 10a including a plurality of lenses arranged along an optical axis L, and a holder 9 configured to hold a plurality of lenses. In the present embodiment, the lens unit 10 is of lens configuration of five lenses in four groups, and includes an arrangement of a lens 1 having a negative power, a lens 2 having a negative power, an annular light shielding sheet 81, a lens 3 having a positive power, a diaphragm 82, and a cemented lens 4 having a positive power, from an object side La to an image side Lb. At the image side Lb with respect to the cemented lens 4, an infrared filter 83 is held by a holder 9. The holder 9 includes a first cylindrical unit 91 extending in an optical axis L direction, a flange part 92 increasing in diameter at an end at the object side La of the first cylindrical unit 91, and a second cylindrical unit 93 protruding toward the object side La from an outer edge of the flange part 92. An inner diameter of the second cylindrical unit 93 is larger than an inner diameter of the first cylindrical unit 91. When such a lens unit 10 is used for an imaging device, an imaging element (not illustrated) is arranged at the image side Lb relative to the infrared filter 83.

The lens 1 is arranged inside the second cylindrical unit 93, and contacts the flange part 92. In this state, the end 930 at the object side La of the second cylindrical unit 93 is caulked to cover an outer peripheral portion of the lens 1 from the object side La. In this way, the lens 1 is held inside the second cylindrical unit 93. The flange part 92 is formed with an annular groove 94. Between the lens 1 and the flange part 92, an annular sealing member 95 located inside the groove 94 is interposed.

Inside the first cylindrical unit 91, the lens 2, the light shielding sheet 81, the lens 3, the diaphragm 82, and the cemented lens 4 are arranged. Inside the first cylindrical unit 91, an annular step 96 is formed, and the cemented lens 4 contacts the step 96 from the object side La to be positioned. At the object side La of the cemented lens 4, the diaphragm 82, the lens 3, the light shielding sheet 81, and the lens 2 are arranged overlaid in this order. In this state, the end 910 at the object side La of the first cylindrical unit 91 is caulked to cover an outer peripheral portion of the lens 2 from the object side La. In this way, the lens 2, the light shielding sheet 81, the lens 3, the diaphragm 82, and the cemented lens 4 are held inside the first cylindrical unit 91.

In the lens 1, a lens surface 11 at the object side La is formed of a convex curved surface, and the lens surface 12 at the image side Lb is formed of a concave curved surface. In the lens 2, a lens surface 21 at the object side La is formed of a convex curved surface, and a lens surface 22 at the image side Lb is formed of a concave curved surface. In the lens 3, a lens surface 31 at the object side La is formed of a concave curved surface, and the lens surface 32 at the image side Lb is formed of a convex curved surface.

(Configuration of cemented lens 4)

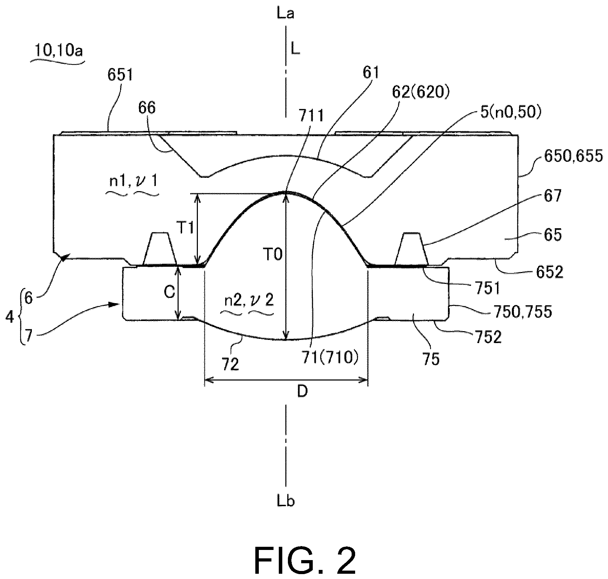

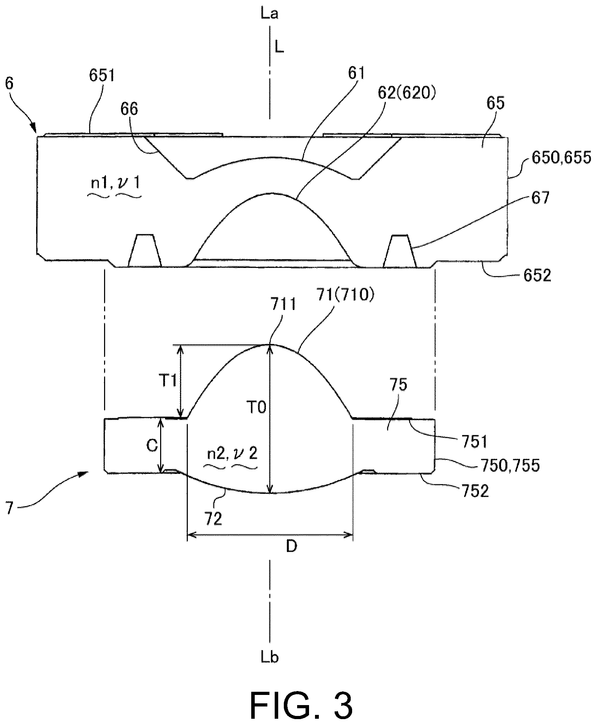

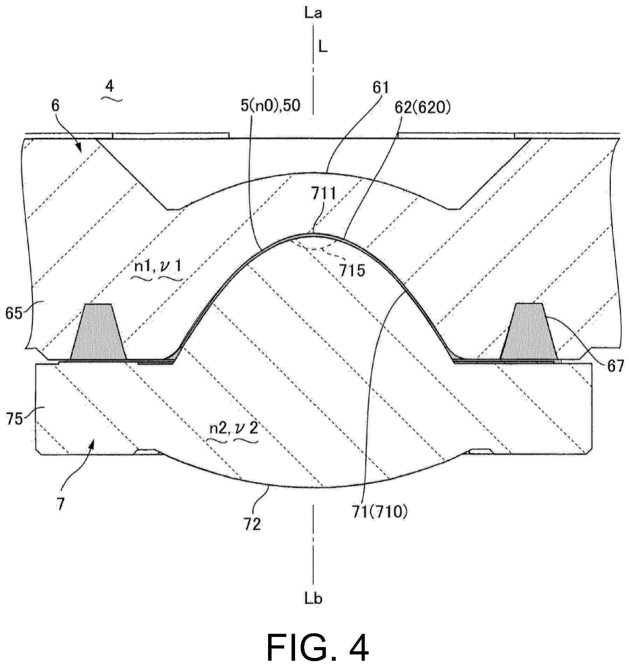

Fig. 2 is an explanatory diagram illustrating a cross-sectional configuration of the cemented lens 4 illustrated in Fig. 1. Fig. 3 is an explanatory diagram illustrating a cross-sectional configuration of the first lens 6 and the second lens 7 used for the cemented lens 4. Fig. 4 is an explanatory diagram illustrating a gap between the first lens 6 and the second lens 7 illustrated in Fig. 2 in an enlarged manner.

As illustrated in Figs. 2, 3 and 4, the cemented lens 4 includes the first lens 6, and the second lens 7 bonded, via the adhesive layer 5, with the first lens 6. In the present embodiment, the first lens 6 is arranged at the object side La of the second lens 7, and the second lens 7 is arranged at the image side Lb of the first lens 6.

The first lens 6 is a plastic lens including a concave lens surface 620 facing the second lens 7 side, and a first flange part 65 surrounding the concave lens surface 620 at an outer peripheral side. In the present embodiment, in the first lens 6, the lens surface 61 at the object side La is formed of a convex curved surface, and the lens surface 62 at the image side Lb is formed of a concave curved surface. The concave lens surface 620 is configured by the lens surface 62 at the image side Lb. The lens surface 61 is formed in a concave part 66 recessed from a surface 651 at the object side La of the first flange part 65 toward the image side Lb, and the lens surface 62 (the concave lens surface 620) is recessed from a surface 652 at the image side Lb of the first flange part 65 toward the object side La. In the surface 652 at the image side Lb of the first flange part 65, around the concave lens surface 620, a concave part 67 for adhesive reservoir extending in an annular or arcuate shape is formed.

The second lens 7 is a plastic lens including a convex lens surface 710 bonded by the adhesive layer 5 on the concave lens surface 620 with facing the first lens 6 side, and a second flange part 75 surrounding the convex lens surface 710 at an outer peripheral side. The second flange part 75 covers, from the image side Lb, the concave part 67 for adhesive reservoir formed in the first flange part 65 of the first lens 6 while configuring the cemented lens 4. In the present embodiment, in the second lens 7, a lens surface 71 at the object side La is formed of a convex curved surface, and a lens surface 72 at the image side Lb is formed of a convex curved surface. The convex lens surface 710 is configured by the lens surface 71 at the object side La. The lens surface 71 (the convex lens surface 710) protrudes toward the object side La from the surface 751 at the object side La of the second flange part 75, and the lens surface 72 protrudes toward the image side Lb from the surface 752 at the image side Lb of the second flange part 75. In the present embodiment, an outer diameter of the first lens 6 is larger than an outer diameter of the second lens 7.

In a manufacturing process of the cemented lens 4 thus configured, a gate is set to a portion corresponding to a side 650 of the first flange part 65 of the first lens 6 and a resin molding is performed in a mold. In this way, the first lens 6 is manufactured. Accordingly, a gate trace 655 is left on the side 650 of the first flange part 65. On the other hand, a gate is set to a portion corresponding to a side 750 of the second flange part 75 of the second lens 7 and a resin molding is performed. In this way, the second lens 7 is manufactured. Accordingly, a gate trace 755 is left on the side 750 of the second flange part 75.

Next, after the adhesive 50 is applied to at least one of the surface at the image side Lb of the first lens 6 and the surface at the object side La of the second lens 7, the first lens 6 and the second lens 7 are overlaid, and then the adhesive 50 is cured. As a result, the cemented lens 4 can be obtained in which the first lens 6 and the second lens 7 are bonded via the adhesive layer 5. In the present embodiment, after the adhesive 50 is applied to the surface at the image side Lb of the first lens 6, the first lens 6 and the second lens 7 are overlaid, and then, the adhesive 50 is cured. In the present embodiment, the adhesive 50 is a UV-curing adhesive. Preferably the adhesive layer 5 has elasticity even after the curing.

(Detailed configuration of second lens 7 or the like)

In the thus configured cemented lens 4, in the present embodiment, all of the conditional expressions (1) to (7) described below are satisfied. Firstly, when T0 denotes a center thickness in an optical axis direction of the second lens 7 and C denotes a thickness in the optical axis L direction of the second flange part 75, the thicknesses T0 and C satisfy the following relationship of:

$$2.0 \leq T0/C \leq 3.2 \dots \text{conditional expression (1)}.$$

Further, when n0 denotes a refractive index of the adhesive layer 5, n1 denotes a refractive index of the first lens 6, and n2 denotes a refractive index of the second lens 7, the refractive indexes n0, n1, and n2 satisfy the following relationship of:

$$|n1 - n0| > |n2 - n0| \cdots \text{conditional expression (2)}.$$

That is, in the cemented lens 4 of the present embodiment, as a value (TO/C) obtained by dividing the center thickness T0 of the second lens 7 by the thickness C of the second flange part 75 is equal to or more than a lower limit (2.0), the convex lens surface 710 of the second lens 7 can be greatly protruded. Therefore, it is possible to effectively reduce an aberration such as a chromatic aberration. Even in this case, the value (TO/C) is equal to or less than an upper limit (3.2), and when the second lens 7 is molded in a mold, a distance in the optical axis L direction from a gate set on the side 750 of the second flange part 75 to an apex 711 of the convex lens surface 710 is regulated. Accordingly, an injection pressure during resin molding can be properly transmitted to the apex 711 of the convex lens surface 710, and thus, a concave part generated due to a resin shrinkage or the like is less likely to occur at the apex 711 of the convex lens surface 710.

Further, as indicated by a dotted line in Fig. 4, even if a concave part 715 generated due to a resin shrinkage or the like occurs at the apex 711 of the convex lens surface 710, the concave part 715 is filled with the adhesive layer 5 during formation of the cemented lens 4. Moreover, the refractive index n0 of the adhesive layer 5 is closer in value to the refractive index n2 of the second lens than the refractive index n1 of the first lens. Therefore, the adhesive layer 5 filled in the concave part 715 acts as a part of the convex lens surface 710 of the second lens 7, and thus, the optical property of the lens unit 10 is less likely to deteriorate. It is noted that in the conditional expression (1), when the value (TO/C) exceeds the upper limit (3.2), the concave part 715 illustrated in Fig. 4 is likely to occur. Further, in the conditional expression (1), when the value (TO/C) exceeds the upper limit (3.2), the concave part 715 illustrated in Fig. 4 is likely to be formed in a shape largely recessed to a depth of about several $\mu$m. If such a situation occurs, even if the adhesive layer 5 is filled in the concave part 715, the optical property of the lens unit 10 may be more likely to deteriorate. For example, the concave part 715 is recessed to a depth of 2$\mu$m or more, the optical property may be more likely to deteriorate.

Further, in the second lens 7, when T1 denotes a dimension in the optical axis L direction from the apex of the convex lens surface 710 to the surface 751 at the first lens 6 side of the second flange part 75, the dimension T1 and the thickness C satisfy the following relationship of:

$$T1/C \leq 1.5 \ldots \text{conditional expression (3)}.$$

That is, in the present embodiment, even when the convex lens surface 710 is protruded greatly from the second flange part 75, its upper limit (1.5) is set. Therefore, the concave part 715 generated due to a resin shrinkage or the like is not likely to occur at the apex 711 of the convex lens surface 710. It is noted that in the conditional expression (3), when the value (T1/C) exceeds the upper limit (1.5), the concave part 715 illustrated in Fig. 4 is likely to occur. Further, in the conditional expression (3), when the value (T1/C) exceeds the upper limit (1.5), the concave part 715 illustrated in Fig. 4 is likely to be formed in a shape largely recessed to a depth of about several $\mu$m. If such a situation occurs, even if the adhesive layer 5 is filled in the concave part 715, the optical property of the lens unit 10 may be more likely to deteriorate.

Further, in the second lens 7, when D denotes a lens diameter of the convex lens surface 710, the lens diameter D and the thickness T0 satisfy the following relationship of:

$$T0 \leq D \cdots \text{conditional expression (4)}.$$

That is, in the present embodiment, even when the thickness of the second lens 7 is increased, an upper limit (D) of the thickness is set. Therefore, the concave part 715 generated due to a resin shrinkage or the like is not likely to occur at the apex 711 of the convex lens surface 710. It is noted that in the conditional expression (4), when the thickness T0 exceeds the upper limit (D), the concave part 715 illustrated in Fig. 4 is likely to occur. Further, in the conditional expression (4), when the thickness T0 exceeds the upper limit (D), the concave part 715 illustrated in Fig. 4 is likely to be formed in a shape largely recessed to a depth of about several $\mu$m. If such a situation occurs, even if the adhesive layer 5 is filled in the concave part 715, the optical property of the lens unit 10 may be more likely to deteriorate.

Here, the refractive indexes n0, n1, and n2 satisfy the following relationship of:

$$n0 \leq n2 < n1 \cdots \text{conditional expression (5)}.$$

That is, the second lens 7 including the convex lens surface 710 is smaller in refractive index than the first lens 6 including the concave lens surface 620. Therefore, it is possible to properly reduce an aberration such as a chromatic aberration. Further, the refractive index n0 of the adhesive layer 5 is smaller than the refractive index n2 of the second lens 7, and thus, the refractive index n0 of the adhesive layer 5 is greatly different from the refractive index n1 of the first lens 6. Accordingly, as illustrated by a dotted line in Fig. 4, even if the concave part 715 generated due to a resin shrinkage or the like occurs at the apex 711 of the convex lens surface 710, the adhesive layer 5 filled in the concave part 715 properly acts as a part of the convex lens surface 710 of the second lens 7, and thus, the optical property of the lens unit 10 is less likely to deteriorate.

Further, the refractive indexes n0 and n2 satisfy the following relationship of:

$$n0 \geq (n2 - 0.06) \cdots \text{conditional expression (6)}.$$

Accordingly, as illustrated by a dotted line in Fig. 4, even if the concave part 715 generated due to a resin shrinkage or the like occurs at the apex 711 of the convex lens surface 710, the refractive index n0 of the adhesive layer 5 is close in value to the refractive index n2 of the second lens, and thus, the adhesive layer 5 filled in the concave part 715 properly acts as a part of the convex lens surface 710 of the second lens 7. Therefore, the optical property of the lens unit 10 is unlikely to deteriorate.

For example, when the refractive index n1 of the first lens 6 is 1.656 and the refractive index n2 of the second lens 7 is 1.538, the adhesive layer 5 having the refractive index n0 of 1.492 is used. When the refractive index n1 of the first lens 6 is 1.635 and the refractive index n2 of the second lens 7 is 1.533, the adhesive layer 5 having the refractive index n0 of 1.488 is used. When the refractive index n1 of the first lens 6 is 1.636 and the refractive index n2 of the second lens 7 is 1.544, the adhesive layer 5 having the refractive index n0 of 1.486 is used. When the refractive index n1 of the first lens 6 is 1.641 and the refractive index n2 of the second lens 7 is 1.546, the adhesive layer 5 having the refractive index n0 of 1.488 is used. In such a configuration example, all of the above conditional expressions (2), (5), and (6) are satisfied.

Further, when v1 denotes the Abbe number of the first lens 6 and v2 denotes the Abbe number of the second lens 7, the Abbe numbers v1 and v2 satisfy both of the following relationships of:

$$v1 \leq 30 \ldots \text{conditional expression (7a);}$$

and

$$v2 \geq 50 \ldots \text{conditional expression (7b).}$$

For example, when the Abbe number v1 of the first lens 6 is 24.0, the Abbe number v2 of the second lens 7 is 55.8. Thus, a wide-angle lens 10a used in the lens unit 10 of the present embodiment is particularly suitable for reducing a chromatic aberration.

[Other embodiments]

In the above embodiment, the present invention is applied to the lens unit 10 having a lens configuration of five lenses in four groups; however, the present invention may be applied to the lens unit 10 having a lens configuration of six lenses in five groups or seven lenses in six groups, and any lens configuration may be employed as long as the cemented lens 4 is included. Further, in the foregoing embodiment, the cemented lens 4 is single; however, the present invention may be applied to a lens unit having a plurality of cemented lenses.

**Claims**

1. A lens unit (10) comprising: a plurality of lenses (1, 2, 3, 4, 6, 7); and a cylindrical holder (9) configured to hold the plurality of lenses (1, 2, 3, 4, 6, 7), wherein
the plurality of lenses (1, 2, 3, 4, 6, 7) include a cemented lens (4) obtained by bonding a second lens (7) through an adhesive layer (5) to a first lens (6),
the first lens (6) is a plastic lens including a concave lens surface (620) facing a side of the second lens (7), and a first flange part (65) surrounding the concave lens surface (620) at an outer peripheral side,

the second lens (7) is a plastic lens including a convex lens surface (710) bonded by the adhesive layer (5) on the concave lens surface (620) with facing a side of the first lens (6), and a second flange part (75) surrounding the convex lens surface (710) at an outer peripheral side,

when T0 denotes a center thickness in an optical axis (L) direction of the second lens (7) and C denotes a thickness in an optical axis (L) direction of the second flange part (75), the thicknesses T0 and C satisfy a relationship of:

$$2.0 \leq T0/C \leq 3.2,$$

and

when n0 denotes a refractive index of the adhesive layer (5), n1 denotes a refractive index of the first lens (6), and n2 denotes a refractive index of the second lens (7), the refractive indexes n0, n1, and n2 satisfy the following relationship of:

$$|n1 - n0| > |n2 - n0|,$$

wherein in the second lens (7), when T1 denotes a dimension in an optical axis (L) direction from the apex (711) of the convex lens surface (710) to a surface at the side of the first lens (6) of the second flange part (75), the dimension T1 and the thickness C satisfy a relationship of:

$$T1/C \leq 1.5.$$

2. The lens unit (10) according to claim 1, wherein when D denotes a lens diameter of the convex lens surface (710), the lens diameter D and the thickness T0 satisfy a relationship of:

$$T0 \leq D.$$

3. The lens unit (10) according to claim 1 or claim 2, wherein the refractive indexes n0, n1, and n2 satisfy a relationship of:

$$n0 \leq n2 < n1.$$

4. The lens unit (10) according to claim 3, wherein the refractive indexes n0 and n2 satisfy a relationship of:

$$n0 \geq (n2 - 0.06).$$

5. The lens unit (10) according to any one of claims 1 through 4, wherein the first lens (6) is arranged at an object side of the second lens (7).

6. The lens unit (10) according to claim 5, wherein when v1 denotes the Abbe number of the first lens (6) and v2 denotes the Abbe number of the second lens (7), the Abbe numbers v1 and v2 satisfy both of the relationships of:

$$v1 \leq 30,$$

and

$$v2 \geq 50.$$

**Patentansprüche**

1. Linseneinheit (10) mit einer Vielzahl von Linsen (1, 2, 3, 4, 6, 7); und einem zylindrischen Halter (9), der zum Halten der Vielzahl von Linsen (1, 2, 3, 4, 6, 7) konfiguriert ist, wobei

   die Mehrzahl von Linsen (1, 2, 3, 4, 6, 7) eine verklebte Linse (4) umfasst, die durch Verbinden einer zweiten Linse (7) durch eine Klebstoffschicht (5) mit einer ersten Linse (6) erhalten wird,

   die erste Linse (6) eine Kunststofflinse ist, die eine konkave Linsenfläche (620), die einer Seite der zweiten Linse (7) zugewandt ist, und einen ersten Flanschteil (65), der die konkave Linsenfläche (620) an einer äußeren Umfangsseite umgibt, umfasst,

   die zweite Linse (7) eine Kunststofflinse ist, die eine konvexe Linsenoberfläche (710), die durch die Klebstoffschicht (5) auf der konkaven Linsenoberfläche (620) mit einer Seite der ersten Linse (6) zugewandt verbunden ist, und einen zweiten Flanschteil (75), der die konvexe Linsenoberfläche (710) an einer äußeren Umfangsseite umgibt, umfasst,

   wenn T0 eine Mittendicke in Richtung der optischen Achse (L) der zweiten Linse (7) und C eine Dicke in Richtung der optischen Achse (L) des zweiten Flanschteils (75) bezeichnet, erfüllen die Dicken T0 und C eine Beziehung von:

$$2.0 \leq T0/C \leq 3.2,$$

   und

   wenn n0 einen Brechungsindex der Klebeschicht (5), n1 einen Brechungsindex der ersten Linse (6) und n2 einen Brechungsindex der zweiten Linse (7) bezeichnet, erfüllen die Brechungsindizes n0, n1 und n2 die folgende Beziehung von:

$$|n1 - n0| > |n2 - n0|,$$

   wobei in der zweiten Linse (7), wenn T1 eine Abmessung in Richtung einer optischen Achse (L) von dem Scheitelpunkt (711) der konvexen Linsenoberfläche (710) zu einer Oberfläche an der Seite der ersten Linse (6) des zweiten Flanschteils (75) bezeichnet, die Abmessung T1 und die Dicke C eine Beziehung erfüllen von:

$$T1/C \leq 1.5.$$

2. Linseneinheit (10) nach Anspruch 1, wobei, wenn D einen Linsendurchmesser der konvexen Linsenoberfläche (710) bezeichnet, der Linsendurchmesser D und die Dicke T0 eine Beziehung erfüllen von:

$$T0 \leq D.$$

3. Linseneinheit (10) nach Anspruch 1 oder Anspruch 2, wobei die Brechungsindizes n0, n1 und n2 die Beziehung erfüllen von:

$$n0 \leq n2 < n1.$$

4. Linseneinheit (10) nach Anspruch 3, wobei die Brechungsindizes n0 und n2 die Beziehung erfüllen von

$$n0 \geq (n2 - 0{,}06).$$

5. Linseneinheit (10) nach einem der Ansprüche 1 bis 4, wobei die erste Linse (6) auf einer Objektseite der zweiten Linse (7) angeordnet ist.

6. Linseneinheit (10) nach Anspruch 5, wobei, wenn v1 die Abbe-Zahl der ersten Linse (6) und v2 die Abbe-Zahl der zweiten Linse (7) bezeichnet, die Abbe-Zahlen v1 und v2 die beiden Beziehungen erfüllen von:
   $v1 \leq 30$, und

$$\nu 2 \geq 50.$$

## Revendications

**1.** Unité de lentille (10) comprenant : une pluralité de lentilles (1, 2, 3, 4, 6, 7) ; et un support cylindrique (9) configuré pour maintenir la pluralité de lentilles (1, 2, 3, 4, 6, 7), dans laquelle
la pluralité de lentilles (1, 2, 3, 4, 6, 7) comprend une lentille collée (4) obtenue par collage d'une seconde lentille (7), par l'intermédiaire d'une couche adhésive (5), à une première lentille (6),
la première lentille (6) est une lentille en matière plastique comprenant une surface de lentille concave (620) orientée vers un côté de la seconde lentille (7), et une première partie bride (65) entourant la surface de lentille concave (620) au niveau d'un côté périphérique externe,
la seconde lentille (7) est une lentille en matière plastique comprenant une surface de lentille convexe (710) collée par la couche adhésive (5) sur la surface de lentille concave (620) en étant orientée vers un côté de la première lentille (6), et une seconde partie bride (75) entourant la surface de lentille convexe (710) au niveau d'un côté périphérique externe,
lorsque T0 désigne une épaisseur centrale dans une direction d'axe optique (L) de la seconde lentille (7) et C désigne une épaisseur dans une direction d'axe optique (L) de la seconde partie bride (75), les épaisseurs T0 et C satisfont une relation :

$$2,0 \leq \text{T0/C} \leq 3,2,$$

et lorsque n0 désigne un indice de réfraction de la couche adhésive (5), n1 désigne un indice de réfraction de la première lentille (6) et n2 désigne un indice de réfraction de la seconde lentille (7), les indices de réfraction n0, n1 et n2 satisfont la relation suivante :

$$|\text{n1} - \text{n0}| > |\text{n2} - \text{n0}|,$$

dans la seconde lentille (7), lorsque T1 désigne une dimension dans une direction d'axe optique (L) à partir du sommet (711) de la surface de lentille convexe (710) jusqu'à une surface du côté de la première lentille (6) de la seconde partie bride (75), la dimension T1 et l'épaisseur C satisfaisant une relation :

$$\text{T1/C} \leq 1,5.$$

**2.** Unité de lentille (10) selon la revendication 1, dans laquelle, lorsque D désigne un diamètre de lentille de la surface de lentille convexe (710), le diamètre de lentille D et l'épaisseur T0 satisfont une relation :

$$\text{T0} \leq \text{D.}$$

**3.** Unité de lentille (10) selon la revendication 1 ou la revendication 2, dans laquelle les indices de réfraction n0, n1 et n2 satisfont une relation :

$$\text{n0} \leq \text{n2} < \text{n1.}$$

**4.** Unité de lentille (10) selon la revendication 3, dans laquelle les indices de réfraction n0 et n2 satisfont une relation :

$$\text{n0} \geq (\text{n2} - 0,06).$$

**5.** Unité de lentille (10) selon l'une quelconque des revendications 1 à 4, dans laquelle la première lentille (6) est disposée d'un côté objet de la seconde lentille (7).

**6.** Unité de lentille (10) selon la revendication 5, dans laquelle, lorsque v1 désigne le nombre d'Abbe de la première lentille (6) et v2 désigne le nombre d'Abbe de la seconde lentille (7), les nombres d'Abbe v1 et v2 satisfont à la fois les relations :

$$\nu1 \leq 30,$$

et

$$\nu2 \geq 50.$$

FIG. 1

FIG. 2

FIG. 3

FIG. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015034922 A
- JP 2016057562 A
- EP 3301492 A1
- US 2015323708 A
- US 2016349475 A
- JP 2010164718 A
- JP S59202415 A
- US 2014347494 A
- US 2014293217 A
- US 2013176633 A
- JP S60191201 A